# EUROPÄISCHE PATENTANMELDUNG

(11) **EP 0 943 535 A2**
(43) Veröffentlichungstag der Anmeldung: **22.09.1999**
(21) Anmeldenummer: 99104564.2
(22) Anmeldetag: 08.03.1999
(51) Int. Cl.: B62M 1/04

(54) **Fahrrad**

(30) Priorität: 14.03.1998 DE 19811250
(71) Anmelder: Meier, Reinhard, 40545 Düsseldorf (DE)
(72) Erfinder: Meier, Reinhard, 40545 Düsseldorf (DE)
(74) Vertreter: Sroka, Peter-Christian, Dipl.-Ing.

(57) **Zusammenfassung**

Fahrrad mit zwei fußgetriebenen Pedalen (3; 3'), von denen die Antriebskraft über einen Kettentrieb, bestehend aus Kettenblatt (5), Endloskette (6) und Hinterrad-Zahnkranz (8), auf das Hinterrad (9) übertragen wird, dadurch gekennzeichnet, daß die b eiden Pedale (3; 3') in geradlinigen Gleitführungen (2; 2') geführt und so miteinander gekoppelt sind, daß bei der Abwärtsbewegung des einen Pedals das andere Pedal zwangsläufig zu einer Aufwärtsbewegung mitgenommen wird, daß an jedem Pedal ein in seinem Abstand zur Kettenblattachse alternierend in der Länge veränderlicher Pedalhebel (4; 4') angelenkt ist, und daß jeder Pedalhebel mittels eines Kupplungselementes mit zugeordnetem Freilauf nur während seiner Abwärtsbewegung kraftübertragend mit dem Kettenblatt (5) gekoppelt ist.

## Beschreibung

Die Erfindung betrifft ein Fahrrad mit zwei alternierend zu entgegengerichteten Hin- und Herbewegungen antreibbaren Pedalen, von denen die Antriebskraft mittels Pedalhebeln über einen Kettentrieb, bestehend aus Kettenblatt, Endloskette und Hinterrad-Zahnkranz, aufdas Hinterrad übertragen wird, wobei die beiden Pedale so miteinander gekoppelt sind, daß bei der Abwärtsbewegung des einen Pedals das andere Pedal zwangsläufig zu einer Aufwärtsbewegung mitgenommen wird.

Bei den üblichen Fahrrädern erfolgt der Antrieb mittels um eine Horizontalachse rotierenden Tretkurbeln, wobei die wirksame Antriebskraft jeweils bei der Abwärtsbewegung der einzelnen Tretkurbel bzw. des einzelnen Pedals auf das Kettenblatt und damit über die Endloskette auf den Hinterrad-Zahnkranz übertragen wird. Bei der Abwärtsbewegung des einzelnen Pedals verändert sich das wirksame Antriebsdrehmoment zwischen den oberen (= Fuß in seiner obersten Stellung) und unteren (= Fuß in seiner untersten Stellung) Totpunkten aufgrund der sich verändernden wirksamen Hebellänge von Null bis zu einem Maximum in der Mittelstellung des Pedals zwischen den oberen und unteren Totpunkten und wieder zurück auf Null. Daraus ergibt es sich, daß nur in einem relativ kleinen Winkelbereich, und zwar im Bereich der Mittelstellung der Pedale, in Abhängigkeit von der dann relativ großen vektoriell wirksamen Hebellänge ein hohes Drehmoment zum Antrieb des Fahrrades erzielt werden kann.

Um den bei einem üblichen rundumlaufenden Kurbelgetriebe bestehenden Nachteil im Hinblick auf eine optimale Kraftausnutzung zu beheben, ist entsprechend der den Ausgangspunkt der vorliegenden Erfindung bildenden US 4 019 230 das übliche rundumlaufende Kurbelgetriebe durch alternierend hin- und herschwingende Kurbelschwingen ersetzt, so daß im wesentlichen nur im Bereich der oben beschriebenen Mittelstellung zwischen den oberen und unteren Totpunkten gearbeitet wird. Da bei dieser bekannten Lösung die Kurbelschwinge sich aber weiterhin auf einem Abschnitt des üblichen rundumlaufenden Kurbelgetriebes bewegt, müßte im Bereich dieser Mittelstellung mit einer sehr hohen Trittfrequenz gearbeitet werden, um die einzelne Pedale bzw. den die Kurbelschwinge bildenden Pedalhebel möglichst nahe der eine optimale Kraftausnutzung bedingenden Mittelstellung zu halten. Eine derartige hohe Trittfrequenz ist jedoch aus physiologischen Gründen nicht praktikabel.

Der Erfindung liegt die Aufgabe zugrunde, ein Fahrrad bzw. einen Fahrradantrieb mit sich alternierend auf- und abbewegenden Pedalen so zu gestalten, daß über einen großen Hubbereich der einzelnen Pedale und damit mit einer gegenüber der oben beschriebenen bekannten Lösung niedrigeren Trittfrequenz dennoch im Bereich des maximalen Drehmomentes gearbeitet werden kann.

Zur Lösung dieser Aufgabe ist das erfindungsgemäße Fahrrad dadurch gekennzeichnet, daß die beiden Pedale in geradlinigen Gleitführungen geführt sind und jeder Pedalhebel in Betrieb hinsichtlich des Abstandes zwischen seinem Anlenkpunkt an dem zugeordneten Pedal und der Kettenblattachse eine veränderliche Länge hat.

Verglichen mit der oben beschriebenen Lösung folgt der einzelne Pedalhebel zwar ebenfalls der Bewegung einer Kurbelschwinge. Die der bekannten Lösung anhaftende Verringerung des auf das Kettenblatt übertragenen Drehmomentes bei sich in Richtung des unteren Totpunktes bewegenden Pedalhebels wird jedoch dadurch ausgeglichen, daß die wirksame Länge des Pedalhebels größer wird.

Aus der DE-PS 670 848 ist ein Fahrrad bzw. ein Fahrradantrieb bekannt, bei dem die einzelnen Pedale in geradlinigen Gleitführungen geführt sind. Zwischen dem einzelnen Pedal und der Kettenblattachse ist ein zweiarmiges Kurbelgetriebe angeordnet, d.h. diese Lösung entspricht einem üblichen rundumlaufenden Kurbelgetriebe mit gegen Null tendierender, auf das Kettenrad übertragener Antriebskraft, wenn sich die mit der Kettenblattachse verbundenen relativ kurzen Tretkurbeln im Bereich ihrer oberen und unteren Totpunktlagen befinden.

Die US-5 236 211 beschreibt ein Antriebssystem für ein Fahrrad mit in geradlinigen Gleitführungen geführten Pedalen. Bei dieser bekannten Lösung sind jedoch keine auf das Kettenrad einwirkenden Pedalhebel vorgesehen sondern ein Bandantrieb, so daß ein Vergleich mit dem Gegenstand der vorliegenden Erfindung nicht möglich ist.

Durch geeignete Dimensionierung der einzelnen Konstruktionselemente kann erreicht werden, daß jedes Pedal alternierend nur noch Auf- und Abwärtsbewegungen, bezogen auf die Kettenblattachse übereinen Winkel von bis zu 90° oder mehr, ausführt, wobei sich die absolute Hebellänge, d.h. der Abstand zwischen den Pedal und Kettenblattachse ebenso verändert wie der vektorielle Horizontalabstand zwischen dem Pedal und der Kettenblattachse. Auf diese Weise wird erreicht, daß während jeder Abwärtsbewegung des einzelnen Pedals das auf das Kettenblatt übertragene Drehmoment weitgehend in der Nähe des Maximums liegt. Bedingt dadurch, daß durch das Hin- und Hergehen des Trethebelsystems das einzelne Pedal bzw. der einzelne Trethebel sich nur noch über einen Winkel im Bereich von etwa 90° bewegt, ist eine höhere Trittfrequenz als bei Tretkurbelsystemen erforderlich, was wiederum dazu führt, daß das maximale auf das Kettenblatt übertragene Drehmoment gegenüber einem üblichen Kurbeltrieb häufiger wirksam ist.

Die nur noch geradlinigen Auf- und Abwärtsbewegungen der Pedale führen verglichen mit Kurbeltrieben auch zu einer Schonung der Hüftgelenke, was sich insbesondere bei Radfahrern mit Hüftgelenkleiden positiv auswirkt.

Weitere Merkmale und Vorteile der Erfindung ergeben sich aus den Unteransprüchen.

Die Erfindung wird im folgenden anhand der Zeichnung näher beschrieben.

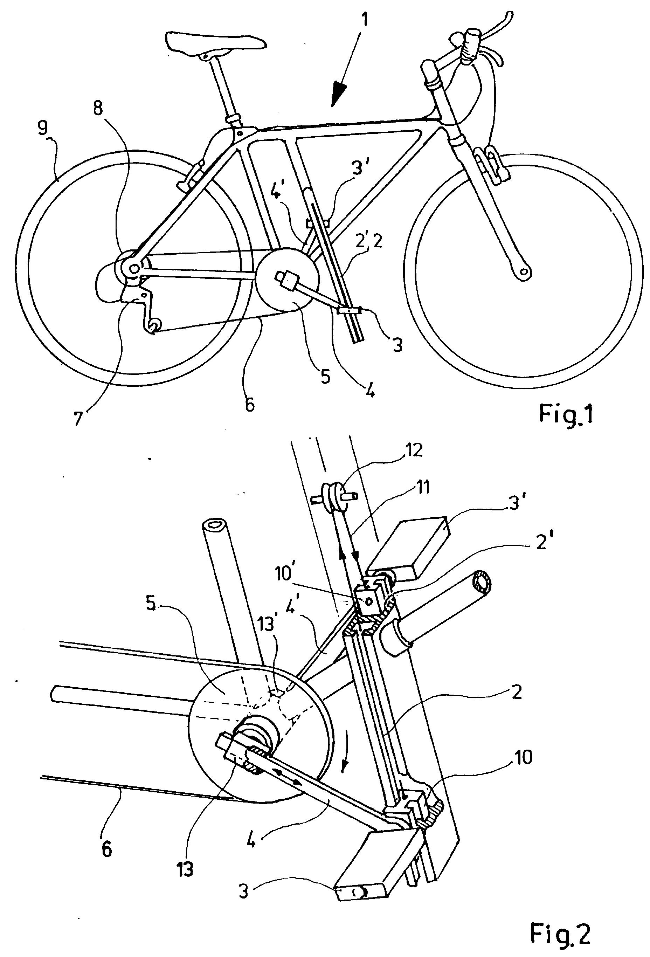

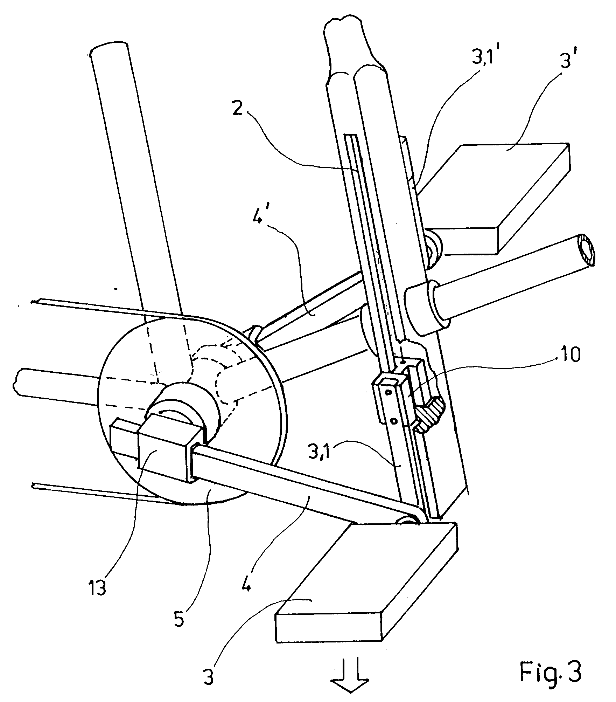

Figur 1 zeigt eine schematische Seitenansicht des erfindungsgemäßen Fahrrads; die Figuren 2 und 3 zeigen in vergrößerter Darstellung zwei Varianten des Antriebsmechanismus.

Das in Figur 1 dargestellte Fahrrad 1 unterscheidet sich von einem bekannten Fahrrad dadurch, daß der übliche Tretkurbelantrieb durch einen Antrieb mit hin- und hergehenden Trethebeln ersetzt ist. Der neue Antriebsmechanismus enthält gemäß Figur 1 für jede Fahrradseite eine sich in Richtung des Fahrradvorderrades von oben nach unten erstreckende Gleitführung 2 bzw. 2' zur geradlinigen Führung der beiden Pedale 3 und 3'. Die beiden Gleitführungen 2, 2' sind parallel nebeneinanderverlaufend an einem Rahmenteil des Fahrrades starr befestigt. Jedes Pedal 3,3' bildet zusammen mit dem Pedalhebel 4,4' einen um die Achse des Kettenblattes 5 hin- und herbeweglichen Trethebel. Das Kettenblatt 5 überträgt über die übliche Endloskette 6, ggfs. unter Einbeziehung einer Gangschaltung 7, die Antriebskraft auf den Zahnkranz 8 des Hinterrades 9.

Gemäß Figur 2 ist jedes Pedal 3 bzw. 3' an einem in der zugeordneten Gleitführung geführten Kulissenstein 10 bzw. 10' angelenkt. Die beiden Kulissensteine 10, 10' sind so miteinander gekoppelt, daß durch die Abwärtsbewegung des einen Pedals das andere Pedal zwangsläufig zu einer Aufwärtsbewegung mitgenommen wird. Gemäß Figur 2 wird dafür ein Seilzug verwendet, der eine innerhalb der Gleitführung außerhalb des Hubbereichs der Kulissensteine drehbar gelagerte Umlenkrolle 12 mit einem an den beiden Kulissensteinen 10, 10' befestigten Seil 11 umfaßt. An Stelle eines Seilzuges kann beispielsweise auch ein Hydraulikaggregat oder dergleichen verwendet werden.

Um bei der Abwärtsbewegung des einen Pedals die Aufwärtsbewegung des anderen Pedals zu ermöglichen, ist jeder Pedalhebel 4,4' mittels eines geeigneten Kupplungselementes mit zugeordnetem Freilauf nur während seiner Abwärtsbewegung kraftübertragend mit dem Kettenblatt 5 gekoppelt.

Zu diesem Zweck können auf jeder Fahrradseite übliche Freilaufsysteme verwendet werden, so wie es sich beispielsweise aus der US 4 019 230 ergibt.

Der einzelne Pedalhebel 4 bzw. 4' kann zur Veränderung seiner absoluten Hebellänge (Abstand zwischen Pedalachse und Kettenblattachse) in einer im Bereich der Kettenblattachse angeordneten Muffe 13 verschiebbar geführt, die als Kupplungselement zwischen den einzelnen Trethebeln und dem Kettenblatt 5 wirksam ist.

Die sich in Richtung des Fahrradvorderrades von oben nach unten erstreckenden Gleitführungen 2, 2' schließen mit der Lotrechten vorzugsweise einen Winkel von 20° bis 45° ein. Die Gleitführungen haben von der Kettenblattachse in der durch die Kettenblattachse gelegten Horizontalebene einen Horizontalabstand vorzugsweise von 120 bis 240 mm. Jede Gleitführung ist am unteren Ende des Pedalhubes jedes Pedals mit einem nicht dargestellten stoßdämpfenden Element ausgerüstet.

Zur Verlängerung der Pedalhebellange kann jeder Pedalhebel auch als Teleskoprohr ausgebildet sein, das mittels eines geeigneten Kupplungselementes mit zugeordnetem Freilauf nur während der Abwärtsbewegung kraftübertragend mit dem Kettenblatt gekoppelt ist.

Bei der in Figur 3 dargestellten Variante ist jedes Pedal 3, 3' an dem Ende eines sich im wesentlichen parallel zu den Gleitführungen 2 erstreckenden Pedalarms 3.1, 3.1' angelenkt, der mit seinem anderen Ende starr an dem innerhalb der zugeordneten Gleitführung geführten Kulissenstein 10 befestigt ist. Auf diese Weise ist der Bodenabstand des unteren Endes der beiden Gleitführungen vergrößert.

Die Kettenblattachse kann in nicht dargestellter Weise aus zwei im wesentlichen im Bereich des Kettenblattes relativ zueinander drehbar zusammengesteckten Achsabschnitten bestehen, von denen jeder unter Zwischenschaltung eines Freilaufes einerseits mit dem Kettenblatt und andererseits mit dem zugeordneten Pedalhebel 4 bzw. 4' gekoppelt ist.

## Patentansprüche

1. Fahrrad mit zwei alternierend zu entgegengesetzt gerichteten Hin- und Herbewegungen antreibbaren Pedalen, von denen die Antriebskraft mittels Pedalhebeln über einen Kettentrieb, bestehend aus Kettenblatt (5), Endloskette (6) und Hinterrad-Zahnkranz (8), auf das Hinterrad übertragen wird, wobei die beiden Pedale so miteinander gekoppelt sind, daß bei der Abwärtsbewegung des einen Pedals das andere Pedal zwangsläufig zu einer Aufwärtsbewegung mitgenommen wird, dadurch gekennzeichnet, daß die beiden Pedale (3,3') in geradlinigen Gleitführungen (2,2') geführt sind, und daß jeder Pedalhebel (4,4') im Betrieb hinsichtlich des Abstandes zwischen seinem Anlenkpunkt an dem zugeordneten Pedal und der Kettenblattachse eine veränderliche Länge hat.

2. Fahrrad nach Anspruch 1, dadurch gekennzeichnet, daß die beiden Pedale (3; 3') an innerhalb der parallel nebeneinander verlaufenden Gleitführungen (2; 2') geführten Kulissensteinen (10; 10') angelenkt sind.

3. Fahrrad nach Anspruch 1, dadurch gekennzeichnet, daß jedes Pedal (3; 3') an einem Ende eines sich im wesentlichen parallel zu den Gleitführungen erstreckenden Pedalarm (3.1; 3.1') angelenkt ist, der mit seinem anderen Ende starr an einem innerhalb der zugeordneten Gleitführung geführten Kulissenstein (10; 10') befestigt ist.

4. Fahrrad nach Anspruch 2 oder 3, dadurch gekennzeichnet, daß die beiden Gleitführungen parallel nebeneinander verlaufend an einem Rahmenteil des Farrades starr befestigt sind.

5. Fahrrad nach Anspruch 2 oder 3, dadurch gekennzeichnet, daß die beiden Kulissensteine (10; 10') mittels eines Seilzuges (11, 12) miteinander verbunden sind, dessen Umlenkrolle (12) in den Gleitführungen (2; 2') außerhalb des Hubbereiches der Kulissensteine drehbar gelagert ist.

6. Fahrrad nach Anspruch 1, dadurch gekennzeichnet, daß die Gleitführungen (2; 2') sich in Richtung des Fahrradvorderrades von oben nach unten erstrecken.

7. Fahrrad nach Anspruch 6, dadurch gekennzeichnet, daß die Gleitführungen (2; 2') mit der Lotrechten einen Winkel von 20 bis 45° einschließen.

8. Fahrrad nach Anspruch 1, dadurch gekennzeichnet, daß die Gleitführungen von der Kettenblattachse in der durch die Kettenblattachse gelegten Horizontalebene einen Horizontalabstand von 120 bis 240 mm haben.

9. Fahrrad nach Anspruch 1, dadurch gekennzeichnet, daß beide Gleitführungen (2; 2') am unteren Ende des Pedalhubes jedes Pedals (3; 3') ein Element mit stoßdämpfenden Eigenschaften aufweisen.

10. Fahrrad nach Anspruch 1, dadurch gekennzeichnet, daß das Kupplungselement eine im Bereich der Kettenblattachse angeordnete Muffe (13; 13') ist, in der der Pedalhebel (4; 4') verschiebbar geführt ist.

11. Fahrrad nach Anspruch 1, dadurch gekennzeichnet, daß jeder Pedalhebel als Teleskoprohr ausgebildet und an dem Kupplungselement befestigt ist.

12. Fahrrad nach Anspruch 1, dadurch gekennzeichnet, daß die Kettenblattachse aus zwei sich im wesentlichen im Bereich des Kettenblattes relativ zueinander drehbar zusammengesteckten Achsabschnitten besteht, von denen jeder unter Zwischenschaltung eines Freilaufs einerseits mit dem Kettenblatt und andererseits mit dem zugeordneten Pedalhebel gekoppelt ist.
